# EUROPÄISCHE PATENTSCHRIFT

(11) **EP 2 588 842 B1**
(45) Veröffentlichungstag und Bekanntmachung des Hinweises auf die Patenterteilung: **17.10.2018**
(21) Anmeldenummer: 11725774.1
(22) Anmeldetag: 20.06.2011
(51) Int. Cl.: G01K 7/32, G01D 3/036, G01N 9/00, G01N 11/16, G01F 23/00, G01F 23/296

(54) **VORRICHTUNG ZUR BESTIMMUNG UND/ODER ÜBERWACHUNG EINER PROZESSGRÖßE EINES MEDIUMS**
APPARATUS FOR DETERMINING AND/OR MONITORING A PROCESS VARIABLE OF A MEDIUM
DISPOSITIF POUR DÉTERMINER ET/OU SURVEILLER UNE GRANDEUR DE PROCESSUS D'UN MILIEU

(30) Priorität: 01.07.2010 DE 102010030791
(43) Veröffentlichungstag der Anmeldung: 08.05.2013
(73) Patentinhaber: Endress+Hauser SE+Co. KG, 79689 Maulburg (DE)
(72) Erfinder: LOPATIN, Sergej, 79540 Lörrach (DE); URBAN, Martin, 79541 Lörrach (DE)
(74) Vertreter: Andres, Angelika Maria
(86) Internationale Anmeldenummer: PCT/EP2011/060201
(87) Internationale Veröffentlichungsnummer: WO 2012/000814

(56) Entgegenhaltungen:
- EP-A1- 1 376 076
- DE-A1- 4 200 578
- DE-A1- 4 327 167
- DE-A1-102005 062 813

## Beschreibung

Die Erfindung bezieht sich auf eine Vorrichtung zur Bestimmung und/oder Überwachung mindestens einer Prozessgröße eines Mediums, insb. einer Dichte, einer Viskosität oder einem Füllstand des Medium in einem Behälter, mit einem mechanisch schwingfähigen Gebilde, das mindestens eine von der Prozessgröße abhängige Schwingungseigenschaft aufweist, einem mindestens ein piezoelektrisches Element aufweisenden elektromechanischen Wandler, der das Gebilde mittels eines dem Wandler zugeführten Anregungssignals zu mechanischen Schwingungen anregt, und der die resultierenden Schwingungen des Gebildes in ein Empfangssignal umwandelt, das einer Überlagerung des Anregungssignals und einem die Schwingung wiedergebendem Nutzsignal entspricht, einem parallel zum Wandler mit dem Anregungssignal beaufschlagten Referenzelement, über das ein von der Schwingung unabhängiges dem Anregungssignal entsprechendes Referenzsignal abgegriffen wird, und einer Elektronik, die anhand des Empfangssignals und des Referenzsignals das Nutzsignal extrahiert, und die anhand des Nutzsignals die Prozessgröße bestimmt und/oder überwacht.

Derartige Vorrichtungen werden in einer Vielzahl von industriellen Anwendungen, insb. in der Mess- und Regeltechnik und der Prozessautomatisierung, zur Bestimmung und/oder zur Überwachung der genannten Prozessgrößen eingesetzt.

Bei den wohl bekanntesten Vorrichtungen dieser Art weist das mechanisch schwingungsfähige Gebilde zwei über eine Membran gekoppelte Schwinggabeln auf, die über einen auf der von den Schwingstäben abgewandten Rückseite der Membran angebrachten elektromechanischen Wandler in gegenläufige Schwingungen senkrecht zu deren Längsachse versetzt werden. Daneben sind auch Vorrichtungen bekannt, deren schwingfähiges Gebilde nur einen Schwingstab oder eine schwingfähige Membran aufweisen.

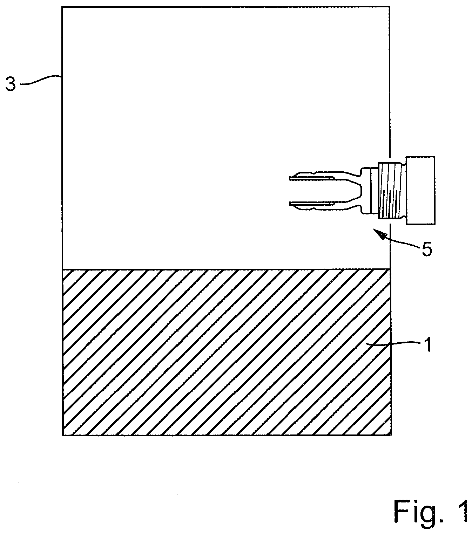

Fig. 1 zeigt ein klassisches Beispiel einer entsprechenden Vorrichtung, wie sie zur Überwachung eines vorbestimmten Füllstandes eines Mediums 1 in einem Behälter 3 eingesetzt wird. Das mechanische schwingfähige Gebilde 5 umfasst hier zwei über eine Membran gekoppelte Schwingstäbe, die auf der Höhe des zu überwachenden Füllstands seitlich in den Behälter 3 eingeführt sind. Das Gebilde 5 wird beispielsweise über einen auf der Rückseite der Membran angeordneten - hier nicht dargestellten - elektromechanischen Wandler in Schwingungen versetzt, indem das die Schwingung wiedergebende Empfangssignal des Wandlers über einen Phasenschieber und einen Verstärker als Anregungssignal auf den Wandler zurückgekoppelt wird.
Zur Füllstandsüberwachung wird beispielsweise über den Phasenschieber eine feste Phasenverschiebung vorgegeben, durch die die Resonanzbedingung für den das mechanische Schwingungssystem als frequenzbestimmendes Element enthaltenden Schwingkreis definiert wird. Die sich auf Grund der vorgegebenen Phasenverschiebung einstellende Frequenz liegt im Bereich der Resonanzfrequenz des Gebildes 5, und ist nachfolgend durchgängig als Schwingfrequenz bezeichnet. Die Schwingfrequenz wird gemessen, und mit einer vorab bestimmten Schaltfrequenz verglichen. Ist sie größer als die Schaltfrequenz, so schwingt das Gebilde 5 frei. Liegt sie unterhalb der Schaltfrequenz, so ist das Gebilde vom Medium 1 überdeckt, und die Vorrichtung meldet ein Überschreiten des vorbestimmten Füllstands.

Alternativ kann bei einem senkrechten Einsetzen eines stab- oder gabelförmigen schwingfähigen Gebildes in das Medium bei entsprechender Kalibrierung anhand der Schwingfrequenz der Bedeckungsgrad und damit der Füllstand über die Länge des Gebildes gemessen werden.

Zur Bestimmung und/oder Überwachung von Dichte oder Viskosität des Mediums wird das Gebilde bis zu einer vorgegebenen Eintauchtiefe senkrecht in das Medium eingeführt, und die resultierende Schwingfrequenz, oder, bei einer Anregung mit einer festen Anregungsfrequenz, die Amplitude oder die Phasenverschiebung der resultierenden Schwingung gegenüber dem Anregungssignal, gemessen.
Eine alternative Anregungsform stellt der Frequenz-Sweep dar, bei dem die Frequenz des Anregungssignals periodisch einen vorgegebenen Frequenzbereich durchläuft. Auch hier wird die Prozessgröße anhand der Frequenz der resultierenden Schwingung, der Amplitude der resultierenden Schwingung, oder der Phasenverschiebung der resultierenden Schwingung gegenüber dem Anregungssignal bestimmt und/oder überwacht.

Heute werden immer häufiger Vorrichtungen eingesetzt, die nur einen einzigen mindestens ein piezoelektrisches Element aufweisenden elektromechanischen Wandler aufweisen, der sowohl zur Schwingungsanregung als auch zur Umwandlung der resultierenden Schwingung in ein elektrisches Empfangssignal eingesetzt wird. Das Empfangssignal des Wandlers entspricht hierbei einer Überlagerung aus dem Anregungssignal und einem die Schwingung wiedergebenden Nutzsignal. Diese Vorrichtungen weisen gegenüber Vorrichtungen mit getrennten Sende- und Empfangswandlern den Vorteil auf, dass sie deutlich kleiner und kostengünstiger herstellbar sind.

Das Anregungssignal ist üblicher Weise eine rechteckförmige elektrische Wechselspannung. Dies hat zur Folge, dass die piezoelektrische Kapazität des Wandlers an den Flanken des Rechtecksignals umgepolt wird, wodurch Lade- und Entladeströme entstehen, die als Störsignal einem die mechanische Schwingung wiedergebendem elektrischen Strom überlagert sind.

Die Lade- und Entladeströme des Wandlers werden beispielsweise mittels eines Kompensationskondensators unterdrückt. Beispiele für diese Form der Störsignalunterdrückung sind aus der DE- 197 20519 A1 und der EP 1 750 104 A2 bekannt. Die dort beschriebenen Vorrichtungen weisen jeweils einen parallel zum Wandler mit dem Anregungssignal beaufschlagten Kompensationskondensator auf, über den ein von der Schwingung unabhängiges dem Anregungssignal entsprechendes Referenzsignal abgegriffen wird. Wandler und Kompensationskondensator weisen- bei gleicher Kapazität - im Bezug auf den Umladevorgang das gleiche Verhalten auf. Werden das über den Wandler abgegriffene Empfangssignal und das über den Kompensationskondensator abgegriffen Referenzsignal, wie in der DE- 197 20 519 A1 beschrieben, voneinander subtrahiert, oder wie in der EP 1 750 104 A2 beschrieben nach einer vorherigen Invertierung addiert, so kompensieren sich die in beiden Signalen gleichermaßen enthaltenen Störsignale und am Ausgang steht das die mechanischen Schwingungen des Gebildes wiedergebende Nutzsignal zur Verfügung.

Während die Kapazität der Kompensationskondensatoren keine oder nur eine sehr geringe Temperaturabhängigkeit aufweisen, ist die Kapazität des Wandlers aufgrund der hohen Temperaturabhängigkeit der Dielektrizitätskonstante piezoelektrischer Werkstoffe in hohem Maße temperaturabhängig. Dies führt dazu, dass die Kompensation der Störsignale umso schlechter funktioniert, je größer der temperaturbedingte Unterschied zwischen der Kapazität des Wandlers und der Kapazität des Kompensationskondensators ist.

Dieses Problem wird in der EP 1 750 104 A2 dadurch gelöst, dass die zur Unterdrückung der Umladepeaks vorgesehene Kapazität des Kompensationskondensators über eine Regelung der über dem Kompensationskondensator anliegenden Kompensationsspannung an die Kapazität des Wandlers angepasst wird. Hierzu werden Wandler und Kompensationskondensator zusätzlich mit einem Hilfssignal beaufschlagt, dessen Frequenz außerhalb des Frequenzbereichs liegt, in dem die Resonanzfrequenz des mechanisch schwingungsfähigen Gebildes liegt. In diesem Frequenzbereich führt das Gebilde eine erzwungene Schwingung mit der Frequenz des Anregungssignals aus, so dass Empfangssignal und Referenzsignal bei Übereinstimmung der Kapazitäten beide ausschließlich das Anregungssignal und das Störsignal enthalten. Es ist eine Regelschleife vorgesehen, die die Kompensationsspannung derart regelt, dass die Umladepeaks des Referenzsignals die Umladepeaks des Empfangssignals des Wandlers bei der Frequenz des Hilfssignals kompensieren.
Hierdurch werden von der Temperatur abhängige Veränderungen der Wandlerkapazität bei der Kompensation der Umladepeaks berücksichtigt und ausgeglichen.

Die Temperatur hat jedoch nicht nur Auswirkungen auf die Wandlerkapazität, sondern wirkt sich insb. auch auf die für die Bestimmung und/oder Überwachung der Prozessgröße maßgeblichen Schwingungseigenschaften des mechanischen Gebildes aus. So verändert sich beispielsweise die Steifigkeit des Materials des schwingungsfähigen Gebildes mit der Temperatur, was wiederum eine Temperaturabhängigkeit der Resonanzfrequenz, der Schwingungsamplitude, und der gegenüber dem Anregungssignal bestehenden Phasenverschiebung der Schwingung des Gebildes zur Folge hat.

Bei der Überwachung eines vorbestimmten Füllstands bedeutet dies z.B., dass die im unbedeckten bzw. im bedeckten Zustand des schwingungsfähigen Gebildes auftretende Schwingfrequenz temperaturabhängigen Schwankungen unterworfen ist. Entsprechend besteht hier abhängig von der Temperatur die Gefahr, dass eine für das Über- bzw. Unterschreiten des zu überwachenden Füllstands vorab festgelegte Schaltfrequenz für die gemessene Schwingfrequenz trotz eines Über-bzw. Unterschreitens des vorbestimmten Füllstands nicht über- bzw. unterschritten wird.
Die Temperaturabhängigkeit der Schwingungseigenschaften führt zu einer deutlichen Temperaturabhängigkeit der Messgenauigkeit der Vorrichtung.
Um trotzdem ein möglichst genaues und zuverlässiges Funktionieren der Vorrichtung sicher zu stellen, ist beispielsweise in der DE 10 2006 007 199 A1 und der WO 02/42724 A1 beschrieben, einen zusätzlichen Temperatursensor im Bereich des Wandlers vorzusehen, um den Einfluss der Temperatur zu kompensieren, und z.B. anhand der damit gemessenen Temperatur eine Anpassung der Schaltfrequenz vorzunehmen.
Ein zusätzlicher Temperatursensor im Bereich des Wandlers benötigt jedoch Platz, ist mit zusätzlichen Kosten verbunden, und muss elektrisch an die, in der Regel entfernt vom Wandler angeordnete, Elektronik der Vorrichtung angeschlossen werden.

Ein Wandler, dessen Temperatur ohne einen zusätzlichen Sensor gemessen wird, ist aus EP 1 376 076 A1 bekannt.

Die Aufgabe der Erfindung besteht daher darin eine kompakte Vorrichtung der eingangs genannten Art anzugeben, die selbsttätig die Temperatur des Wandlers erfasst.

Hierzu besteht die Erfindung in einer Vorrichtung zur Bestimmung und/oder Überwachung mindestens einer Prozessgröße eines Mediums, insb. einer Dichte, einer Viskosität oder eines Füllstands des Mediums, in einem Behälter, mit
- einem mechanisch schwingfähigen Gebilde, das mindestens eine von der Prozessgröße abhängige Schwingungseigenschaft aufweist,
- einem mindestens ein piezoelektrisches Element aufweisenden elektromechanischen Wandler,
   -- der das Gebilde mittels eines dem Wandler zugeführten Anregungssignals zu mechanischen Schwingungen anregt, und
   -- der die resultierenden Schwingungen des Gebildes in ein Empfangssignal umwandelt, das einer Überlagerung des Anregungssignals und einem die Schwingung wiedergebendem Nutzsignal entspricht,
- einem parallel zum Wandler mit dem Anregungssignal beaufschlagten Referenzelement, über das ein von der Schwingung unabhängiges dem Anregungssignal entsprechendes Referenzsignal abgegriffen wird, und
- einer Elektronik,
   -- die anhand des Empfangssignals und des Referenzsignals das Nutzsignal extrahiert, und
   -- die anhand des Nutzsignals die Prozessgröße bestimmt und/oder überwacht, bei der die Elektronik eine Temperaturmesseinrichtung umfasst, die so ausgestattet ist, dass sie den Wandler und das Referenzelement in einem Temperaturmessbetrieb mit einem Hilfssignal beaufschlagt, dessen Frequenz außerhalb eines durch eine Resonanzfrequenz des Schwingungsgebildes vorgegebenen Frequenzbereichs liegt, und anhand des im Temperaturmessbetrieb extrahierten Nutzsignals eine Temperatur des Wandlers bestimmt.

Gemäß einer bevorzugten Ausgestaltung weist das Referenzelement mindestens ein Bauelement elektrisch einstellbarer Größe auf, und es ist eine an die Temperaturmesseinrichtung angeschlossene Regelvorrichtung zur Einstellung der Größe des Bauelements vorgesehen, die die Größe des Bauelements auf einen Wert regelt, bei dem ein Betrag einer Amplitude des Nutzsignals im Temperaturmessbetrieb minimal ist.

Gemäß einer Weiterbildung dieser Ausgestaltung
- ist ein Speicher vorgesehen, in dem eine Kennlinie der Vorrichtung abgespeichert ist, die die Abhängigkeit des Wertes der einstellbaren Größe von der Temperatur des Wandlers wiedergibt, und
- die Temperatur wird anhand des geregelten Wertes und der Kennlinie bestimmt.

Gemäß einer Weiterbildung umfasst das Referenzelement eine Reihenschaltung aus dem Bauelement elektrisch einstellbarer Größe und einem Kondensator mit einer vorgegebenen Referenzkapazität, und das Bauelement ist ein Widerstand.

Gemäß einer ersten Ausführungsform einer ersten Variante der Erfindung
- ist ein im Temperaturmessbetrieb mit dem Nutzsignal gespeister Gleichrichter vorgesehen,
- ist das mittels des Gleichrichters gleichgerichtete Nutzsignal einer Logik, insb. einen Mikrocontroller oder ein feldprogrammierbaren Gate Array, zugeführt,
- bestimmt die Logik eine Amplitude des gleichgerichteten Nutzsignals, und regelt die Größe des einstellbaren Bauelements im Temperaturmessbetrieb auf den Wert, bei dem der Betrag der Amplitude des Nutzsignals minimal ist.

Gemäß einer Ausgestaltung der ersten Ausführungsform
- umfasst der Gleichrichter einen parallel zum Wandler und zum Referenzelement geschalteten Komparator und einen Multiplizierer,
- liegt das Hilfssignal im Temperaturmessbetrieb parallel am Wandler, am Referenzelement und am Komparator an,
- liegen ein Ausgangssignal des Komparators und das Nutzsignal am Multiplizierer an, und
- ist dem Multiplizierer ein Tiefpass nachgeschaltet, dessen Ausgangsignal als gleichgerichtetes geglättetes Nutzsignal an der Logik anliegt.

Gemäß einer zweiten Ausführungsform der ersten Variante der Erfindung umfasst die Vorrichtung
- eine Abtastvorrichtung zur Abtastung des Nutzsignals, die die Amplitude des Nutzsignals im Temperaturmessbetrieb zu Abtastzeitpunkten bestimmt, an denen eine Amplitude des Hilfssignals Extrema aufweist, und
- es ist eine an die Abtastvorrichtung angeschlossene Logik vorgesehen,
   -- die einen Vergleich der Vorzeichen der Amplituden von Hilfssignal und Nutzsignal zu den Abtastzeitpunkten ausführt, und
   -- anhand des Vergleichs eine Richtung und anhand der Amplituden des Nutzsignals im Temperaturmessbetrieb einen Betrag ermittelt, um den der Wert der Größe des elektrischen Bauelements nachzuregeln ist.

Gemäß einer Weiterbildung der ersten Variante der Erfindung liegt an dem Wandler und dem Referenzelement ein Signal mit einer periodisch kontinuierlich veränderlichen Frequenz an,
- dessen Perioden jeweils einen Zeitbereich umfassen,
   -- in dem die Frequenz des Signals kontinuierlich ansteigt oder abfällt, und
   -- in dem das Signal das Anregungssignal bildet, und
- dessen Perioden jeweils einen diesem Zeitbereich zeitlich vorausgehenden und/oder jeweils einen diesem Zeitbereich zeitlich nachfolgenden Zeitabschnitt umfassen,
   -- in dem die Frequenz des Signals konstant ist und außerhalb des durch eine Resonanzfrequenz des Schwingungsgebildes vorgegebenen Frequenzbereichs liegt, und
   -- in dem das Signal das Hilfssignal bildet.

Gemäß einer Ausgestaltung der ersten Variante sind Anregungs- und Hilfssignal beide sinusförmige Signale, beide dreieckförmige Signale, beide trapezförmige Signale, oder beide rechteckförmige Signale.

Weiter umfasst die Erfindung eine zweite Variante der Vorrichtung, bei der
- das Anregungssignal im Temperaturmessbetrieb ein rechteckförmiges Signal ist,
- das Hilfssignal ein Anteil des Anregungssignals ist, dessen Frequenzen oberhalb des durch die Resonanzfrequenz des Schwingungsgebildes vorgegebenen Frequenzbereichs liegen,
- die Temperaturmesseinrichtung einen mit dem Nutzsignal gespeisten Hochpass aufweist, der aus dem Nutzsignal ein Messsignal herausfiltert, dessen Frequenzen oberhalb des durch die Resonanzfrequenz des Schwingungsgebildes vorgegebenen Frequenzbereichs liegen, und
- die Temperaturmesseinrichtung anhand des Messsignals die Temperatur des Wandlers bestimmt.

Weiter umfasst die Erfindung eine Weiterbildung der Vorrichtung der zweiten Variante, bei der
- das Referenzelement mindestens ein Bauelement elektrisch einstellbarer Größe aufweist, und
- eine an die Temperaturmesseinrichtung angeschlossene Regelvorrichtung zur Einstellung der Größe des Bauelements vorgesehen ist, die die Größe des Bauelements auf den Wert regelt, bei dem der Betrag der Amplitude des Messsignals im Temperaturmessbetrieb minimal ist.

Gemäß einer Weiterbildung der letztgenannten Weiterbildung ist ein Speicher vorgesehen, in dem eine Kennlinie der Vorrichtung abgespeichert ist, die die Abhängigkeit des Wertes der einstellbaren Größe von der Temperatur des Wandlers wiedergibt, und die Temperatur wird anhand des geregelten Wertes und der Kennlinie bestimmt.

Dabei umfasst das Referenzelement vorzugsweise eine Reihenschaltung aus dem Bauelement elektrisch einstellbarer Größe und einem Kondensator mit einer vorgegebenen Referenzkapazität, und das Bauelement ist ein Kompensationswiderstand.

Gemäß einer Weiterbildung weist die Elektronik eine Kompensationsvorrichtung auf, die anhand der in den Temperaturmessbetrieben bestimmten Temperaturen mindestens eine Temperaturabhängigkeit einer von der Prozessgröße abhängigen Schwingungseigenschaft des Gebildes kompensiert.

Gemäß einer Weiterbildung einer erfindungsgemäßen Vorrichtung zur Überwachung eines Über- oder Unterschreiten eines vorgegebenen Grenzwertes der Prozessgröße,
- sind für einen vorgegebenen Temperaturbereich, in dem die Vorrichtung einsetzbar ist, Schwellwerte für die von der Prozessgröße abhängige Schwingungseigenschaft in der Vorrichtung abgelegt, die die Schwingungseigenschaft beim Erreichen des Grenzwertes bei der jeweiligen Temperatur aufweist, und
- wird das Über- oder Unterschreiten des vorgegebenen Grenzwertes anhand der im Temperaturmessbetrieb ermittelten Temperatur und dem dieser Temperatur zugeordneten Schwellwert überwacht.

Erfindungsgemäß wird die Temperaturabhängigkeit der Wandlerkapazität zur Bestimmung der Temperatur des Wandlers und damit des mechanisch schwingungsfähigen Gebildes genutzt. Dabei werden ausschließlich zur temperaturkompensierten Gewinnung des Nutzsignals ohnehin erforderliche Komponenten der Elektronik eingesetzt. Damit steht eine zuverlässige Temperaturmessung zur Verfügung, ohne dass hierzu zusätzliche Bauteile erforderlich sind. Ein Temperatursensor im Bereich des Wandlers, der Platz beanspruchen würde ist nicht erforderlich. Die Vorrichtung ist dadurch äußerst kompakt und kostengünstige herstellbar.

Anhand der gemessenen Temperatur ist es nun möglich, in einem großen Temperaturbereich eine genaue und zuverlässige Bestimmung und/oder Überwachung der Prozessgröße auszuführen, indem anhand der gemessenen Temperatur eine Kompensation der Temperaturabhängigkeit der von der Prozessgröße abhängigen gemessenen Schwingungseigenschaften vorgenommen wird.

Ein weiterer Vorteil der Erfindung besteht darin, dass anstelle des im Stand der Technik verwendeten Kompensationskondensators ein einstellbarer Widerstand verwendet wird, zu dem ein Kondensator mit vorgegebener Kapazität in Serie geschaltet ist. Die vorgegebene Kapazität bildet eine konstante Referenzkapazität die als fester Bezugspunkt für die Temperaturbestimmung im Vergleich zu der in der Regel sehr stark von der Temperatur abhängigen Wandlerkapazität zur Verfügung steht.

Im Unterschied zu dem genannten Stand der Technik, bei dem einige der Ausführungsbeispiele reckteckförmige Anregungssignale zwingend voraussetzen, ist es möglich die erfindungsgemäße Vorrichtung gemäß der ersten Variante mit unterschiedlichen Anregungssignalformen zu betreiben. Sowohl bei einer Anregung mit sinusförmigen als auch mit rechteckförmigen oder trapezförmigen Spannungen ist eine saubere und vor allem temperaturunabhängige Nutzsignalgewinnung und eine zuverlässige Temperaturmessung gewährleistet. Dabei kann die gleiche Vorrichtung im Normalbetrieb in Resonanz betrieben werden, mit einer festen Anregungsfrequenz zu erzwungenen Schwingungen angeregt werden, oder im so genannten Frequenz-Sweep Verfahren mit Anregungssignalen periodisch variierender Frequenz betrieben werden. Aufgrund der Vielzahl der möglichen Anregungssignalformen ist die Vorrichtung sehr universell und vielseitig einsetzbar.

Die Erfindung und deren Vorteile werden nun anhand der Figuren der Zeichnung, in denen drei Ausführungsbeispiele dargestellt sind, näher erläutert; gleiche Teile sind in den Figuren mit gleichen Bezugszeichen versehen.
- Fig. 1 zeigt:: eine seitlich in einen Behälter hineinragende Vorrichtung zur Überwachung eines vorbestimmten Füllstands;
- Fig. 2 zeigt:: einen Schaltplan einer ersten Variante einer erfindungsgemäßen Vorrichtung;
- Fig. 3 zeigt:: die Amplituden des Empfangssignals, des Referenzsignals und des Nutzsignals im Temperaturmessbetrieb bei einer Abgleichstemperatur, für die eine optimale Anpassung des Referenzelements besteht;
- Fig. 4 zeigt:: die Amplituden des Empfangssignals, des Referenzsignals und des Nutzsignals im Temperaturmessbetrieb bei einer Temperatur die unterhalb der Abgleichstemperatur liegt;
- Fig. 5 zeigt:: die Amplituden des Empfangssignals, des Referenzsignals und des Nutzsignals im Temperaturmessbetrieb bei einer Temperatur die oberhalb der Abgleichstemperatur liegt;
- Fig. 6 zeigt:: einen Schaltplan einer weiteren Ausführungsform der ersten Variante der erfindungsgemäßen Vorrichtung;
- Fig. 7 zeigt:: einen Membranschwinger mit zwei darauf aufgebrachten piezoelektrischen Elementen; und
- Fig. 8 zeigt:: einen Schaltplan einer zweiten Variante der erfindungsgemäßen Vorrichtung.

Die Erfindung betrifft eine Vorrichtung zur Bestimmung und/oder Überwachung mindestens einer Prozessgröße eines Mediums 1, insb. einer Dichte, einer Viskosität oder einem Füllstand des Medium in einem Behälter 3.

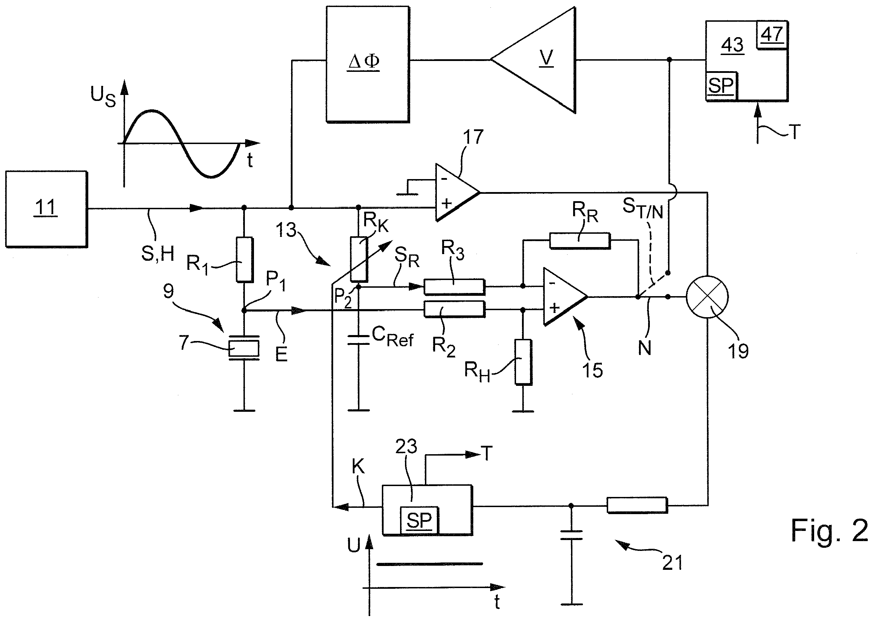

Fig. 2 zeigt einen Schaltplan eines ersten Ausführungsbeispiels einer erfindungsgemäßen Vorrichtung. Diese umfasst ein mechanisch schwingungsfähiges Gebilde, z.B. das in Fig. 1 dargestellte Gebilde 5, das mindestens eine von der Prozessgröße abhängige Schwingungseigenschaft aufweist. Es ist ein mindestens ein piezoelektrisches Element 7 aufweisender elektromechanischer Wandler 9 vorgesehen, der dazu dient, das Gebilde 5 mittels eines dem Wandler 9 zugeführten Anregungssignals S zu mechanischen Schwingungen anzuregen. In dem dargestellten Ausführungsbeispiel umfasst der Wandler 9 ein einziges scheibenförmiges piezoelektrisches Element 7, das beispielsweise auf einer von den Schwingstäben abgewandten Innenseite der Membran flächig aufgebracht ist. Das piezoelektrische Element 7 ist elektrisch gesehen ein Kondensator, dessen Kapazität in hohem Maße von der Temperatur T abhängig ist. Das piezoelektrische Element 7 ist zwischen zwei Elektroden eingefasst, von denen eine z.B. über die Membran an ein Bezugspotential, z.B. Masse angeschlossen ist, und von denen die andere über einen Vorwiderstand R1 mit dem Anregungssignal S beaufschlagt ist.

Das Anregungssignal S ist beispielsweise eine mittels eines Anregungssignalgenerators 11 erzeugte Wechselspannung, über die das piezoelektrische Element 7 zu Dickenoszillationen angeregt wird. Dementsprechend führt das damit verbundene mechanisch schwingfähige Gebilde 5 von der Anregung und der Prozessgröße abhängige resultierende Schwingungen aus, die über den Wandler 9 in ein elektrisches Empfangssignal E umwandelt werden, das einer Überlagerung des Anregungssignals S und einem die Schwingung wiedergebendem Nutzsignal N entspricht. Das Empfangssignal E wird über einem zwischen dem Wandler 9 und dem Vorwiderstand R1 befindlichen Abgriff P1 abgenommen.

Darüber hinaus umfasst die Vorrichtung ein parallel zum Wandler 9 mit dem Anregungssignal S beaufschlagtes Referenzelement 13, über das ein von der Schwingung unabhängiges dem Anregungssignal S entsprechendes Referenzsignal S_{R} abgegriffen wird.

Das Referenzelement 13 umfasst eine Reihenschaltung aus einem elektrischen Bauteil, vorzugsweise einem Kompensationswiderstand R_{K}, elektrisch einstellbarer Größe und einem Kondensator C_{ref}, der vorzugsweise eine vorgegebene Referenzkapazität aufweist.

Das Referenzsignal S_{R} wird an einem zwischen dem Kompensationswiderstand R_{K} und dem Kondensator C_{ref} angeordneten Abgriff P2 abgenommen.

Es ist eine Elektronik vorgesehen, die anhand des Empfangssignals E und des Referenzsignals S_{R} das Nutzsignal N extrahiert. Bei einer optimalen Anpassung des Referenzelements 13 an den parallel dazu über den Vorwiderstand R1 mit dem Anregungssignal S beaufschlagten Wandler 9 unterscheiden sich Empfangssignal E und Referenzsignal S_{R} lediglich durch das im Empfangssignal E zusätzlich enthaltene die Schwingung wiedergebende Nutzsignal N. Insb. sind gegebenenfalls auftretende Störsignale, wie z.B. in Verbindung mit rechteckförmigen Anregungssignalen auftretende Umladungspeaks, in beiden Signalen gleichermaßen enthalten. Das gewünschte Nutzsignal N kann daher über eine einfache Differenzbildung aus den beiden Signalen extrahiert werden.

Hierzu umfasst die Elektronik beispielsweise einen Differenzverstärker 15 dessen nicht invertierender Eingang über einen Vorwiderstand R2 mit dem Abgriff P1 und dessen invertierendem Eingang über einen weiteren Vorwiderstand R3 mit dem Abgriff P2 verbunden ist. Darüber hinaus ist der nicht invertierende Eingang über einen weiteren Hilfswiderstand R_{H} an das Bezugspotential angeschlossen. Ein Ausgangssignal des Differenzverstärkers 15 bildet das Nutzsignal N, das über einen Rückkopplungswiderstand R_{R} auf den invertierenden Eingang des Differenzverstärkers 15 zurück geführt ist.

Die elektrische Kapazität des Wandlers 9 ist aufgrund der starken Temperaturabhängigkeit der Kapazitäten piezoelektrischer Elemente in hohem Maße von der Temperatur T abhängig. Diese

Temperaturabhängigkeit wird in einem Temperaturmessbetrieb dazu genutzt, die Temperatur T des Wandlers 9 und damit des schwingungsfähigen Gebildes 5 zu bestimmen.
Hierzu ist eine Temperaturmesseinrichtung vorgesehen, die den Wandler 9 und das Referenzelement 13 im Temperaturmessbetrieb mit einem Hilfssignal H beaufschlagt, dessen Frequenz f außerhalb eines durch eine Resonanzfrequenz fᵣ des schwingfähigen Gebildes 5 vorgegebenen Frequenzbereichs liegt.

Hierzu sind nachfolgend zwei Varianten beschrieben.

Bei der ersten Variante wird der Normalbetrieb, in dem die Vorrichtung die Bestimmung und/oder Überwachung der Prozessgröße ausführt, für die Dauer des Temperaturmessbetriebs unterbrochen.

Wird der Wandler 9 im Normalbetrieb beispielsweise als Frequenz bestimmendes Glied eines Schwingkreises eingesetzt, in dem das Nutzsignal N über einen Verstärker V verstärkt und mittels eines Phasenschiebers ΔΦ um eine die Resonanzbedingung erfüllende Phasenverschiebung phasenverschoben wird, und dem Wandler 9 als Anregungssignal S zugeführt wird, so kann das Nutzsignal N hier beispielsweise über einen elektronisch gesteuerten Schalter S_{T/N} im Normalbetrieb dem Schwingkreis und im Temperaturmessbetrieb der Temperaturmesseinrichtung zugeführt werden. In diesem Fall kann das Hilfssignal H, mit dem der Wandler 9 und das Referenzelement 13 im Temperaturmessbetrieb beaufschlagt werden völlig unabhängig vom Anregungssignal S vorgegeben werden.
Es gibt Anwendungen, bei denen das Anregungssignal S im Normalbetrieb einen vorgegebenen Frequenzbereich durchläuft. In diesem Fall wird an den Wandler 9 und das Referenzelement 13 vorzugsweise ein Signal mit einer periodisch kontinuierlich veränderlichen Frequenz f(t) angelegt, dessen Perioden jeweils einen Zeitbereich umfassen, in dem die Frequenz des Signals kontinuierlich ansteigt bzw. abfällt, und einen diesem Zeitbereich zeitlich vorausgehenden und/oder jeweils einen diesem Zeitbereich zeitlich nachfolgenden Zeitabschnitt umfassen, in dem die Frequenz f_{H} des Signals konstant ist und außerhalb des durch eine Resonanzfrequenz fᵣ des Schwingungsgebildes vorgegebenen Frequenzbereich liegt. In dem Fall bildet dieses Signal in den Zeitbereichen, in denen dessen Frequenz kontinuierlich ansteigt oder abfällt, das Anregungssignal S, und in den Zeitbereichen, in denen die Frequenz f_{H} konstant ist das Hilfssignal H. Die Dauer des Temperaturmessbetriebs entspricht hier der Dauer der letztgenannten Zeitbereiche.

Bei einer Anregung mit der außerhalb des Bereichs der Resonanzfrequenz fᵣ liegenden Frequenz f_{H} führt das Gebilde 5 eine durch das Hilfssignal H vorgegebene erzwungene Schwingung aus. Entsprechend folgt auch das Empfangssignal E dem Hilfssignal H, und enthält keine von den Schwingungseigenschaften des Gebildes 5 abhängige Komponenten. Bei einer optimalen Anpassung des Referenzelements 13 sind Empfangssignal E und Referenzsignal S_{R} folglich identisch, und das Nutzsignal N verschwindet. Die optimale Anpassung des Referenzelements 13 erfolgt - wie nachfolgend im Detail erläutert - durch die Einstellung des Kompensationswiderstands R_{K}. Aufgrund der Temperaturabhängigkeit der Wandlerkapazität liegt eine bei einer Abgleichstemperatur T_{R} vorgenommene optimale Anpassung des Referenzelements 13 jedoch nur solange vor, wie die Temperatur T des Wandlers 9 im Bereich der Abgleichstemperatur T_{R} verbleibt.

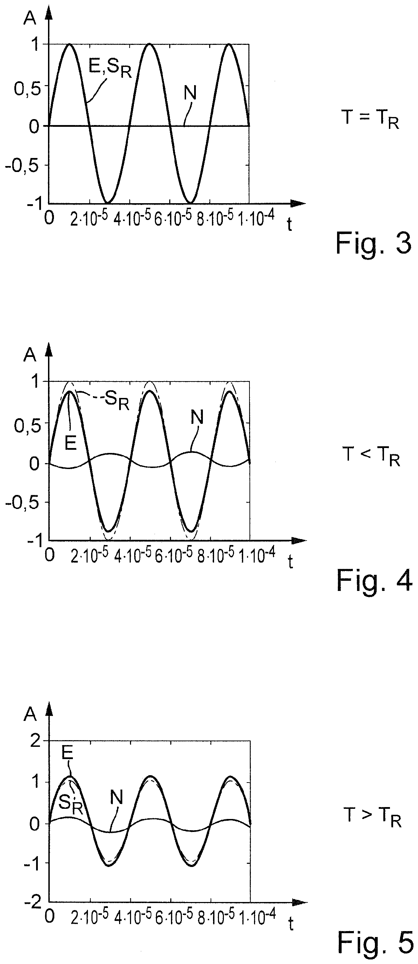

Fig. 3 zeigt Empfangssignal E, Referenzsignal S_{R} und Nutzsignal N, wie sie bei einer Anregung mit einem sinusförmigen Hilfssignal H auftreten, dessen Frequenz f deutlich größer oder kleiner als die Resonanzfrequenz fᵣ der Vorrichtung ist, auftreten, wenn die Temperatur T gleich der Abgleichstemperatur T_{R}, ist, für die das Referenzelements 13 optimal angepasst ist. Wie in Fig. 3 dargestellt sind Empfangssignal E und Referenzsignal S_{R} identisch und weisen als Funktion der Zeit t den gleichen durch das Hilfssignal H vorgegebenen sinusförmigen Amplitudenverlauf A(E), A(S_{R}) auf. Die Amplitude A(N) des Nutzsignals N ist null.

Sinkt die Temperatur T auf einen Wert unterhalb der Abgleichstemperatur T_{R}, so nimmt die Kapazität des Wandlers 9 entsprechend ab. Eine optimale Anpassung ist bei unverändertem Referenzelement 13 nicht mehr gewährleistet. Fig. 4 zeigt Empfangssignal E, Referenzsignal S_{R} und Nutzsignal N, wie sie bei einer Anregung mit einem sinusförmigen Hilfssignal H auftreten, dessen Frequenz f deutlich größer oder kleiner als die Resonanzfrequenz fᵣ der Vorrichtung ist, bei einer Temperatur T unterhalb der Abgleichstemperatur T_{R} auftreten. Alle drei Signale weisen auch hier die Frequenz f_{H} des Hilfssignals H auf. Die Amplitude A(E) des Empfangssignals E ist jedoch deutlich geringer als die die Amplitude A(S_{R}) des Referenzsignals S_{R}. Das durch die Differenzbildung generierte Nutzsignal N weist entsprechend gegenüber dem Hilfssignal H (bzw. was gleichbedeutend ist gegenüber dem Empfangssignal E bzw. dem Referenzsignal S_{R}) eine Phasenverschiebung von 180° und eine um einen von der Temperaturdifferenz zwischen der herrschenden Temperatur T und der Abgleichstemperatur T_{R} abhängige von Null verschiedene Amplitude A(N) auf.

Steigt die Temperatur T auf einen Wert oberhalb der Abgleichstemperatur T_{R}, so nimmt die Kapazität des Wandlers 9 entsprechend zu. Eine optimale Anpassung ist bei unverändertem Referenzelement 13 auch hier nicht mehr gegeben. Fig. 5 zeigt Empfangssignal E, Referenzsignal S_{R} und Nutzsignal N, wie sie bei einer Anregung mit einem sinusförmigen Hilfssignal H auftreten, dessen Frequenz f_{H} deutlich größer oder kleiner als die Resonanzfrequenz fᵣ der Vorrichtung ist, bei einer Temperatur T oberhalb der Abgleichstemperatur T_{R} auftreten. Alle drei Signale weisen auch hier die Frequenz f_{H} des Hilfssignals H auf. Die Amplitude A(E) des Empfangssignals E ist jedoch größer als die die Amplitude A(S_{R}) des Referenzsignals S_{R}. Das durch die Differenzbildung generierte Nutzsignal N weist entsprechend gegenüber dem Hilfssignal H (bzw. was gleichbedeutend ist gegenüber dem Empfangssignal E bzw. dem Referenzsignal S_{R}) eine Phasenverschiebung von 0° und eine um einen von der Temperaturdifferenz zwischen der herrschenden Temperatur T und der Abgleichstemperatur T_{R} abhängige von Null verschiedene Amplitude A(N) auf.

Bei einer bekannten Einstellung des Referenzelements 13 ist die im Temperaturmessbetrieb resultierende Amplitude A(N) des Nutzsignal N ein direktes Maß für die Kapazität des Wandlers 9 und damit auch für dessen Temperatur T. Damit ist es grundsätzlich möglich, das Referenzelement 13 für eine vorgegebene Referenztemperatur optimal auszulegen, und nachfolgend anhand der im Temperaturmessbetrieb gemessenen Amplituden A(N) des Nutzsignals N die Temperatur T des Wandlers 9 zu bestimmen.

Vorzugsweise wird jedoch ein indirektes Messverfahren eingesetzt, bei dem anhand des im Temperaturmessbetrieb erhaltenen Nutzsignals N eine optimale Anpassung des Referenzelements 13 an die momentane Temperatur T des Wandlers 9 vorgenommen wird, und die Temperatur T indirekt anhand der hierfür erforderlichen Einstellung des Referenzelements 13 abgeleitet wird.

Zur Bestimmung der Amplitude A(N) des Nutzsignals N umfasst die in Fig. 2 dargestellte Ausführungsform der Temperaturmesseinrichtung einen im Temperaturmessbetrieb mit dem Nutzsignal N gespeisten Gleichrichter, der das Nutzsignal N gleichrichtet. Dieser umfasst beispielsweise einen parallel zum Wandler 9 und zum Referenzelement 13 geschalteten auf das Bezugspotential bezogener Komparator 17, der im Temperaturmessbetrieb parallel zu dem Wandler 9 und dem Referenzelement 13 mit dem Hilfssignal H beaufschlagt ist. Das Ausgangssignal des Komparators 17 und das Nutzsignal N liegen an einem Multiplizierer 19 an, an dessen Ausgang das gleichgerichtete Nutzsignal N zur Verfügung steht. Dem Multiplizierer 19 ist vorzugsweise ein Tiefpass 21 nachgeschaltet, der eine Glättung des gleichgerichteten Nutzsignals N bewirkt. Das gleichgerichtete geglättete Nutzsignal liegt an einer Logik 23, insb. einen Mikrocontroller oder einem feldprogrammierbaren Array (FPGA) an, die die Amplitude A(N) des gleichgerichteten geglätteten Nutzsignals N bestimmt.

Um zugleich eine Messung der Temperatur T und eine optimale Anpassung des Referenzelements 13 zu bewirken, weist die Vorrichtung eine an die Temperaturmesseinrichtung angeschlossene Regelvorrichtung zur Einstellung der Größe des Kompensationswiderstands R_{K} auf, die die Größe des Kompensationswiderstands R_{K} auf den Wert regelt, bei dem der Betrag der Amplitude des Nutzsignals N im Temperaturmessbetrieb minimal ist. Die Regelvorrichtung ist vorzugsweise in der Logik 23 enthalten, die hierzu einen Steuersignalausgang K aufweist, über den sie die Größe des einstellbaren Widerstands R_{K} auf den entsprechenden Wert regelt.

Der eingestellte Wert des Widerstands R_{K} ist ein Maß für die Temperatur T des Wandlers 9. Die Temperaturabhängigkeit dieses Wertes wird in entsprechenden vorab in einem Kalibrationsverfahren bestimmten Kennlinien erfasst und in einem der Logik 23 zugeordneten Speicher SP z.B. in Form einer Tabelle oder einer Formel abgelegt. Die Logik 23 regelt im Temperaturmessbetrieb den Wert des Widerstands R_{K} wie oben beschrieben, und bestimmt anhand des eingeregelten Wertes und der zugehörigen Kennlinie die Temperatur T des Wandlers 9.

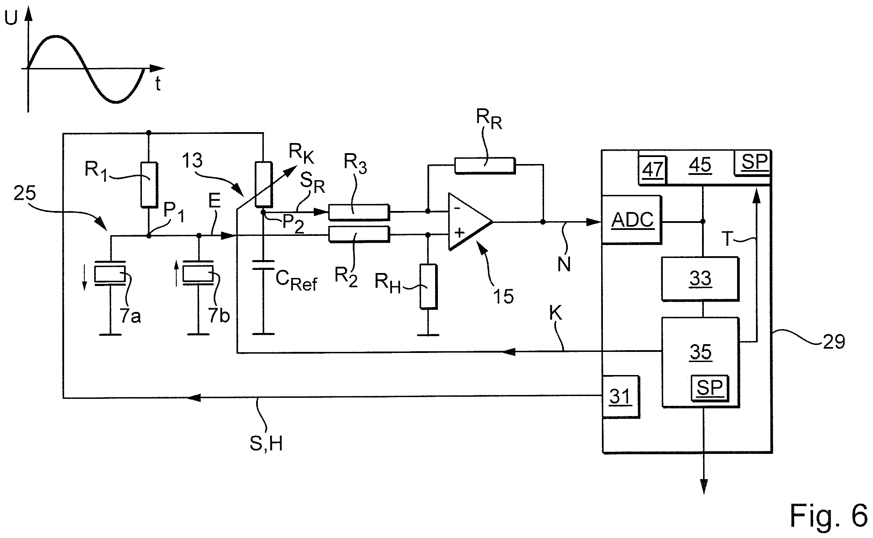

Fig. 6 zeigt eine weitere Ausführungsform der ersten Variante einer erfindungsgemäßen Vorrichtung. Die Vorrichtung stimmt in weiten Teilen mit der in Fig. 2 gezeigten Vorrichtung überein, so dass nachfolgend nur die bestehenden Unterschiede näher erläutert sind.

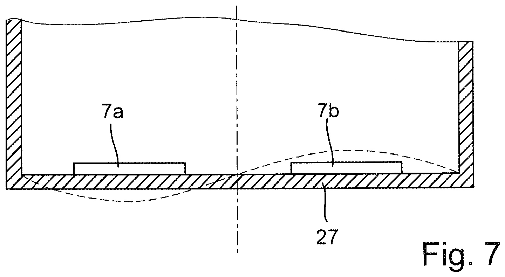

Ein Unterschied besteht darin, dass hier als weiteres Beispiel eines mindestens ein piezoelektrisches Element aufweisenden Wandlers ein Wandler 25 mit zwei piezoelektrischen Elementen 7a, 7b vorgesehen ist. Derartige Wandler 25 werden beispielsweise in Verbindung mit dem in Fig. 7 dargestellten schwingungsfähigen Gebilde 27 eingesetzt. Das Gebilde 27 ist eine kreisscheibenförmige Membran, auf deren Innenseite die beiden formgleichen vorzugsweise kreissegmentförmigen piezoelektrischen Elemente 7a und 7b symmetrisch zur Membranmitte aufgebracht sind.

Der Wandler 25 dient auch hier sowohl als Erzeuger als auch als Empfänger der mechanischen Schwingungen des mechanisch schwingungsfähigen Gebildes 27. Hierzu werden die beiden piezoelektrischen Elemente 7a und 7b elektrisch parallel betrieben und mit dem gleichen Anregungssignal S bzw. dem gleichen Hilfssignal H beaufschlagt. Bei entgegen gesetzter Polarisation der Elemente 7a, 7b wird die Membran hierdurch zu - hier durch eine gestrichelte Linie angedeutete - Schwingungen der zweiten Mode angeregt.

Das Empfangssignal E des Wandlers 25, das Referenzsignal S_{R} und das Nutzsignal N werden auf die bereits anhand von Fig. 2 beschriebene Weise abgeleitet.

Im Unterschied zu der in Fig. 2 dargestellten Vorrichtung weist die hier dargestellte Vorrichtung eine Temperaturmesseinrichtung und eine Regeleinrichtung zur Regelung des Kompensationswiderstands R_{K} auf, die als integraler Bestandteil einer elektronischen Einheit 29, z.B. eines Mikrocontrollers oder eines feldprogrammierbaren Gate Arrays (FPGA), ausgebildet sind.

Darüber hinaus weist diese Einheit 29 vorzugsweise einen integrierten Signalgenerator 31 auf, der im Normalbetrieb das Anregungssignal S und im Temperaturmessbetrieb das Hilfssignal H generiert, mit dem parallel sowohl der Wandler 25 als auch das Referenzelement 13 beaufschlagt werden.

Das Nutzsignal N wird der Einheit 29 über einen Analog-Digital-Wandler ADC in digitaler Form zugeführt. Die Einheit 29 umfasst eine Abtastvorrichtung 33 zur Abtastung des Nutzsignals N. Da das Nutzsignal N im Temperaturmessbetrieb gegenüber dem Hilfssignal H eine Phasenverschiebung von 0° bzw. von 180° aufweist, genügt es die Amplitude A(N) des Nutzsignals N im Temperaturmessbetrieb zu Abtastzeitpunkten zu bestimmen, an denen die Amplitude des Hilfssignals H Extrema aufweist.
Wird das Hilfssignal H dabei durch die Einheit 29 generiert, ist der hierfür erforderliche zeitliche Bezug der beiden Signale automatisch gegeben.

Alternativ könnte die Erzeugung des Anregungssignals S und des Hilfssignals H hier natürlich auf die gleiche Weise erfolgen, wie bei dem in Fig. 2 dargestellten Ausführungsbeispiel. In dem Fall müsste das Nutzsignal N entweder genauer abgetastet werden, oder der für die oben beschriebene äußerst effiziente Abtastung erforderliche Zeitbezug auf andere Weise hergestellt werden. Zur Herstellung des Zeitbezugs kann z.B. die Phasenlage des Hilfssignals H ermittelt werden, indem das Hilfssignal H - wie auch in Fig. 2 - parallel über einen Komparator 17 geführt wird, und eine Abtastung von dessen Ausgangssignal vorgenommen wird.

Die Einheit 29 umfasst eine an die Abtastvorrichtung 33 angeschlossene Logik 35, die im Temperaturmessbetrieb einen Vergleich der Vorzeichen der Amplituden von Hilfssignal H und Nutzsignal N zu den Abtastzeitpunkten ausführt, und anhand des Vergleichs eine Richtung und anhand der Amplituden des Nutzsignals N im Temperaturmessbetrieb einen Betrag ermittelt, um den der Wert der Größe des Kompensationswiderstands R_{K} nachzuregeln ist. Die Regelung wird über einen an die Logik 35 angeschlossenen Steuerausgang K der Einheit 29 vorgenommen.

Genau wie bei dem zuvor beschriebenen Ausführungsbeispiel ist der eingestellte Wert des Widerstands R_{K} auch hier ein Maß für die Temperatur T des Wandlers 25. Die Temperaturabhängigkeit dieses Wertes wird in entsprechenden vorab in einem Kalibrationsverfahren bestimmten Kennlinien erfasst und in einem der Logik 35 zugeordneten Speicher SP abgelegt. Die Logik 35 regelt im Temperaturmessbetrieb den Wert des Widerstands R_{K}, und bestimmt anhand des eingeregelten Wertes und der zugehörigen Kennlinie die Temperatur T des Wandlers 25.

Neben der anhand der Figuren 2 und 6 beschriebenen ersten Variante, bei der der Normalbetrieb für die Temperaturmessung unterbrochen wird, umfasst die Erfindung eine zweite Variante, mit der die Temperaturmessung während des normalen Betriebs der Vorrichtung ausgeführt werden kann.

Fig. 7 zeigt einen Schaltplan eines Ausführungsbeispiels hierzu. Aufgrund der großen Übereinstimmung zu der in Fig. 6 dargestellten Ausführungsform der ersten Varianten sind nachfolgend lediglich die bestehenden Unterschiede näher erläutert.

Die Temperaturmessung erfolgt auch bei der zweiten Variante über eine Temperaturmesseinrichtung, die den Wandler 25 und das Referenzelement 13 im Temperaturmessbetrieb mit einem Hilfssignal H beaufschlagt, dessen Frequenzen außerhalb des durch die Resonanzfrequenz fᵣ des schwingfähigen Gebildes 27 vorgegebenen Frequenzbereichs liegen.

Um die Anpassung des Referenzelements 13 und die Messung der Temperatur T des Wandlers 25 während des Normalbetriebs der Vorrichtung ausführen zu können, wird bei dieser zweiten Variante zumindest im Temperaturmessbetrieb ein Anregungssignal S_{H} eingesetzt, dass das Hilfssignal H enthält.

Hierdurch ist es möglich die Vorrichtung permanent zeitgleich im Normalbetrieb und im Temperaturmessbetrieb zu betreiben. Alternativ können natürlich auch Parallelbetriebsintervalle vorgesehen werden, in denen der Temperaturmessbetrieb sporadisch, periodisch oder zu vorgegebenen Zeiten parallel zum Normalbetrieb ausgeführt wird. In diesem Fall braucht das Anregungssignal S lediglich während des Parallelbetriebs das Hilfssignal H zu enthalten, während es im reinen Normalbetrieb, genau wie bei der ersten Variante frei wählbar ist.
Erfindungsgemäß ist das im Parallelbetrieb eingesetzte Anregungssignal S_{H} ein rechteckförmiges Signal, insb. eine rechteckförmige Wechselspannung. Rechteckförmige Signale weisen aufgrund deren Signalform neben deren Grundfrequenz zwangsläufig höherfrequente Anteile auf, deren Frequenzen oberhalb der Resonanzfrequenz fᵣ des mechanisch schwingfähigen Gebildes 27 liegen. Diese höherfrequenten Anteile des Anregungssignals S_{H} bilden das Hilfssignal H.

Im Unterschied zu den in Fig. 2 bis Fig. 6 dargestellten sinusförmigen Anregungs- bzw. Hilfssignalen S; H, bewirkt das in der zweiten Variante eingesetzte rechteckförmige, das Hilfssignal H zwangsläufig enthaltende, Anregungssignals S_{H} die eingangs bereits beschriebenen Umladungsströme über den Wandler 25 und das Referenzelement 13. Diese spiegeln sich im Empfangssignal E und im Referenzsignal S_{R} als Umladungspeaks wieder.

Auch hier gilt, völlig analog zu den bisherigen Ausführungsbeispielen, dass sich die auf das Hilfssignal H zurückzuführenden Signalanteile von Empfangssignal E und Referenzsignal S_{R} bei einer optimalen Anpassung des Referenzelements 13 bei der Bildung des Nutzsignals N gegenseitig kompensieren. Ändert sich die Temperatur T gegenüber der Abgleichstemperatur T_{R}, für die das Referenzelement 13 zuletzt optimal angepasst wurde, so kommt es aufgrund der mit der Änderung der Temperatur verbundenen Änderung der Kapazität des Wandlers 25, zu einer Verstimmung zwischen dem den Wandlers 25 enthaltenden Messzweig und dem durch das Referenzelement 13 gebildeten Referenzzweig. Dies führt dazu, dass das Nutzsignal N neben dem die mechanische Schwingung wiedergebenden Signalanteil auch einen auf das Hilfssignal H zurückzuführenden Signalanteil aufweist.

Im Gegensatz zu dem die Schwingung wiedergebenden Signalanteil weist der auf das Hilfssignal H zurückzuführende Signalanteil des Nutzsignals N jedoch ausschließlich Frequenzen auf, die oberhalb des durch die Resonanzfrequenz fᵣ des schwingfähigen Gebildes 27 vorgegebenen Frequenzbereichs liegen.
Entsprechend weist die Temperaturmesseinrichtung bei dieser Variante einen mit dem Nutzsignal N gespeisten Hochpass 37 auf, der aus dem Nutzsignal N ein Messsignal M herausfiltert, dessen Frequenzen oberhalb des durch die Resonanzfrequenz fᵣ des schwingfähigen Gebildes 27 vorgegebenen Frequenzbereichs liegen.

Auch hier kann die Temperatur des Wandlers 25 bei bekannter Einstellung des Referenzelements 13 unmittelbar anhand des Messsignals M bestimmt werden. Vorzugsweise wird jedoch auch hier der indirekte Weg über die Anpassung des Referenzelements 13 gewählt.

Das Messsignal M wird hierzu über einen Analog-Digitalwandler A/D einer vorzugsweise in der elektronischen Einheit 29 integrierten Logik 39 zugeführt, die eine Regelvorrichtung 41 zur Einstellung der Größe des Bauelements R_{K} umfasst, die die Größe des Bauelements R_{K} auf den Wert regelt, bei dem der Betrag der Amplitude des Messsignals M im Temperaturmessbetrieb minimal ist.

Analog zu den Ausführungen zu den Figuren 3 bis 5 gilt auch hier, dass die Amplituden A der auf das Hilfssignal H zurückzuführenden Anteile des Empfangssignals E kleiner als die Amplituden A der auf das Hilfssignal H zurückzuführenden Anteile des Referenzsignals S_{R} sind, wenn die Temperatur T auf Werte absinkt, die unterhalb der Abgleichstemperatur T_{R} liegen, für die das Referenzelement 13 optimal angepasst ist, und umgekehrt.

Entsprechend wird in der Logik 39 beispielsweise eine mittlere Amplitude A_{M} des Messsignals M und deren Vorzeichen bestimmt. Die mittlere Amplitude A_{M} des Messsignals M liefert den Betrag und deren Vorzeichen die Richtung, um den der Wert der Größe des Kompensationswiderstands R_{K} nachzuregeln ist. Die Regelung wird auch hier vorzugsweise über einen an die Regelvorrichtung 41 angeschlossenen Steuerausgang der Einheit 29 vorgenommen.

Die Logik 39 bestimmt die Temperatur T auf die oben bereits in Verbindung mit den Vorrichtungen gemäß der ersten Variante beschriebene Weise.

Die erfindungsgemäßen Vorrichtungen weisen den Vorteil auf, dass im Temperaturmessbetrieb gleichzeitig eine optimale Anpassung des Referenzelements 13 und die Messung der Temperatur T ausgeführt werden. Damit steht im nachfolgenden Normalbetrieb ein hinsichtlich der Temperaturabhängigkeit der Kapazität des jeweils verwendeten Wandlers 9, 25 kompensiertes Nutzsignal N zur Verfügung.

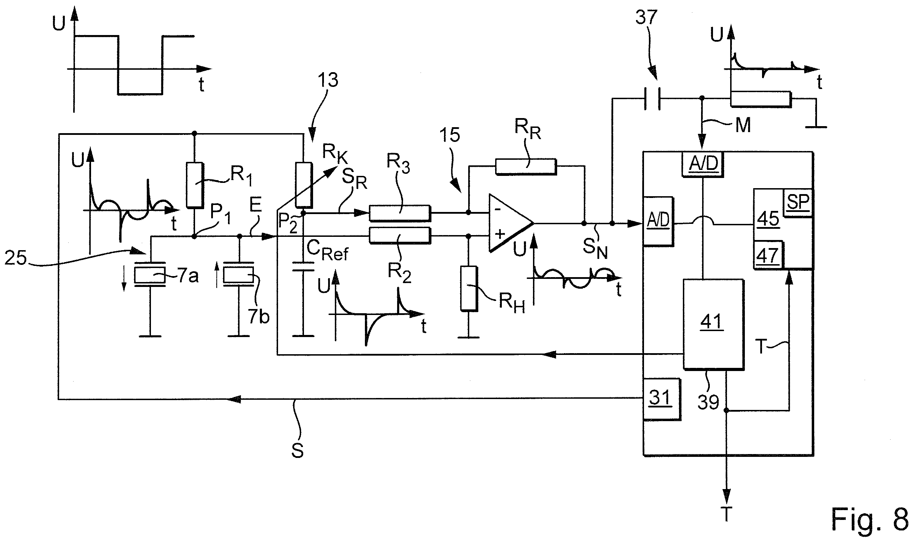

Das Nutzsignal N wird einer Mess- und Auswertungseinheit zugeführt, die anhand des Nutzsignals N die Prozessgröße bestimmt und/oder überwacht. In dem in Fig. 2 dargestellten Ausführungsbeispiel ist eine Mess- und Auswertungseinheit 43 vorgesehen, der das analoge Nutzsignal N zugeführt wird. In den in den Figuren 6 und 8 dargestellten Ausführungsbeispielen ist eine in der Einheit 29 integrierte Mess- und Auswertungseinheit 45 vorgesehen, der das Nutzsignal N in digitaler Form zugeführt wird.

Zur Bestimmung und /oder Überwachung der Prozessgröße können die aus dem Stand der Technik bekannten Betriebs- und Auswertungsverfahren eingesetzt werden. Dabei wird durch die Mess- und

Auswertungsschaltung 43, 45 anhand des Nutzsignals N eine von der jeweiligen zu bestimmenden und/oder zu überwachenden Prozessgröße, z.B. des Füllstands, der Dichte oder der Viskosität, abhängige Schwingungseigenschaft des mechanisch schwingfähigen Gebilde 5, 27 abgeleitet. Zu den Schwingungseigenschaften zählen insb. die Schwingungsfrequenz, die Schwingungsamplitude und/oder die Phasenverschiebung der Schwingung gegenüber dem Anregungssignal S, die jeweils anhand der Frequenz des Nutzsignals N, der Amplitude des Nutzsignals N bzw. der Phasenverschiebung des Nutzsignals N gegenüber dem Anregungssignal S messtechnisch erfassbar sind.

Die Schwingungseigenschaften des schwingungsfähigen Gebildes 5, 27 weisen neben deren Abhängigkeit von der Prozessgröße auch eine Temperaturabhängigkeit auf. Die Hauptursache hierfür besteht darin, dass sich die Steifigkeit des Materials des schwingungsfähigen Gebildes 5, 27 mit der Temperatur ändert. Dementsprechend weisen die Schwingungseigenschaften des Gebildes 5, 27, insb. die Schwingungsfrequenz, die Schwingungsamplitude und/oder die Phasenverschiebung der Schwingung gegenüber dem Anregungssignal S, eine Temperaturabhängigkeit auf. Die Temperaturabhängigkeiten dieser Schwingungseigenschaft werden in einem Kalibrationsverfahren bestimmt und beispielsweise in Form von Kennlinien in einem der Mess- und Auswertungseinrichtung 43, 45 zugeordneten Speicher SP abgelegt.

Die Mess- und Auswertungseinrichtung 43, 45 umfasst eine Kompensationsvorrichtung 47, die anhand der Kennlinien und der in den Temperaturmessbetrieben bestimmten Temperaturen T die Temperaturabhängigkeit der jeweils zur Bestimmung und/oder Überwachung der gewünschten Prozessgröße verwendeten Schwingungseigenschaft des Gebildes 5, 27 kompensiert.

Bei einer erfindungsgemäßen Vorrichtung zur Überwachung eines Über- oder Unterschreiten eines vorgegebenen Grenzwertes einer Prozessgröße, z.B. eines vorgegebenen Füllstands, erfolgt dies beispielsweise in dem in einem Kalibrationsverfahren für einen vorgegebenen Temperaturbereich Schwellwerte für die von der Prozessgröße abhängige Schwingungseigenschaft bestimmt werden, die die Schwingungseigenschaft beim Erreichen des Grenzwertes bei der jeweiligen Temperatur T aufweist. Die Schwellwerte werden als Funktion der Temperatur in der Vorrichtung in dem der Mess- und Auswertungseinrichtung 43, 45 zugeordneten Speicher SP abgelegt.

Die eigentliche Überwachung erfolgt nun durch die Mess- und Auswertungseinrichtung 43, 45 die anhand der im Temperaturmessbetrieb ermittelten Temperatur T, den dieser Temperatur T zugeordneten Schwellwert ausliest und anhand dieses Schwellwerts das Über- oder Unterschreiten des vorgegebenen Grenzwertes überwacht.

### Bezugszeichenliste

- 1: Medium
- 3: Behälter
- 5: mechanisch schwingfähiges Gebilde
- 7: piezoelektrisches Element
- 9: elektromechanischer Wandler
- 11: Anregungssignalgenerator
- 13: Referenzelement
- 15: Differenzverstärker
- 17: Komparator
- 19: Multiplizierer
- 21: Tiefpass
- 23: Logik
- 25: Wandler
- 27: mechanisch schwingungsfähiges Gebilde
- 29: elektronische Einheit
- 31: Signalgenerator
- 33: Abtastvorrichtung
- 35: Logik
- 37: Hochpass
- 39: Logik
- 41: Regelvorrichtung
- 43: Mess- und Auswertungseinheit
- 45: Mess- und Auswertungseinheit
- 47: Kompensationsvorrichtung

## Patentansprüche

1. Vorrichtung zur Bestimmung und/oder Überwachung mindestens einer Prozessgröße eines Mediums (1), insb. einer Dichte, einer Viskosität oder eines Füllstands des Mediums (1) in einem Behälter (3), mit
- einem mechanisch schwingfähigen Gebilde (5, 27) das mindestens eine von der Prozessgröße abhängige Schwingungseigenschaft aufweist,
- einem mindestens ein piezoelektrisches Element (7, 7a, 7b) aufweisenden elektromechanischen Wandler (9, 25)
-- der das Gebilde (5, 27) mittels eines dem Wandler (9, 25) zugeführten Anregungssignals (S) zu mechanischen Schwingungen anregt, und
-- der die resultierenden Schwingungen des Gebildes (5, 27) in ein Empfangssignal (E) umwandelt, das einer Überlagerung des Anregungssignals (S) und einem die Schwingung wiedergebendem Nutzsignal (N) entspricht,
- einem parallel zum Wandler (9, 25) mit dem Anregungssignal (S) beaufschlagten Referenzelement (13), über das ein von der Schwingung unabhängiges dem Anregungssignal (S) entsprechendes Referenzsignal (S_{R}) abgegriffen wird, und
- einer Elektronik,
-- die anhand des Empfangssignals (E) und des Referenzsignals (S_{R}) das Nutzsignal (N) extrahiert, und
-- die anhand des Nutzsignals (N) die Prozessgröße bestimmt und/oder überwacht,
**dadurch gekennzeichnet, dass** die Elektronik eine Temperaturmesseinrichtung umfasst, die so ausgestattet ist, dass sie den Wandler (9, 25) und das Referenzelement (13) in einem Temperaturmessbetrieb mit einem Hilfssignal (H) beaufschlagt, dessen Frequenz (f_{H}) außerhalb eines durch eine Resonanzfrequenz (fᵣ) des Schwingungsgebildes (5, 27) vorgegebenen Frequenzbereichs liegt, und anhand des im Temperaturmessbetrieb extrahierten Nutzsignals (N) eine Temperatur (T) des Wandlers (9, 25) bestimmt.

2. Vorrichtung nach Anspruch 1, **dadurch gekennzeichnet, dass**
- das Referenzelement (13) mindestens ein Bauelement (R_{K}) elektrisch einstellbarer Größe aufweist,
- eine an die Temperaturmesseinrichtung angeschlossene Regelvorrichtung zur Einstellung der Größe des Bauelements (R_{K}) vorgesehen ist, die die Größe des Bauelements (R_{K}) auf den Wert regelt, bei dem ein Betrag einer Amplitude (A(N)) des Nutzsignals (N) im Temperaturmessbetrieb minimal ist.

3. Vorrichtung nach Anspruch 2, **dadurch gekennzeichnet, dass**
- ein Speicher (SP) vorgesehen ist, in dem eine Kennlinie der Vorrichtung abgespeichert ist, die die Abhängigkeit des Wertes der einstellbaren Größe von der Temperatur (T) des Wandlers (9, 25) wiedergibt, und
- die Temperatur (T) anhand des geregelten Wertes und der Kennlinie bestimmt wird.

4. Vorrichtung nach Anspruch 1, **dadurch gekennzeichnet, dass** das Referenzelement (13) eine Reihenschaltung aus dem Bauelement (R_{K}) elektrisch einstellbarer Größe und einem Kondensator (C_{ref}) mit einer vorgegebenen Referenzkapazität umfasst, und das Bauelement (R_{K}) ein Kompensationswiderstand ist.

5. Vorrichtung nach Anspruch 1, **dadurch gekennzeichnet, dass**
- ein im Temperaturmessbetrieb mit dem Nutzsignal (N) gespeister Gleichrichter vorgesehen ist,
- das mittels des Gleichrichters gleichgerichtete Nutzsignal (N) einer Logik (23), insb. einen Mikrocontroller oder einem feldprogrammierbaren Gate Array (FPGA), zugeführt ist, und
- die Logik (23) eine Amplitude des gleichgerichteten Nutzsignals (N) bestimmt, und die Größe des einstellbaren Bauelements (R_{K}) im Temperaturmessbetrieb auf den Wert regelt, bei dem der Betrag der Amplitude des Nutzsignals (N) minimal ist.

6. Vorrichtung nach Anspruch 5, **dadurch gekennzeichnet, dass**
- der Gleichrichter einen parallel zum Wandler (5) und zum Referenzelement (13) geschalteten Komparator (17) und einen Multiplizierer (19) umfasst,
- das Hilfssignal (H) im Temperaturmessbetrieb parallel am Wandler (5), am Referenzelement (13) und am Komparator (17) anliegt,
- ein Ausgangssignal des Komparators (17) und das Nutzsignal (N) am Multiplizierer (19) anliegen, und
- dem Multiplizierer (19) ein Tiefpass (21) nachgeschaltet ist, dessen Ausgangsignal als gleichgerichtetes geglättetes Nutzsignal an der Logik (23) anliegt.

7. Vorrichtung nach Anspruch 2, **dadurch gekennzeichnet, dass**
- eine Abtastvorrichtung (33) zur Abtastung des Nutzsignals (N) vorgesehen ist, die die Amplitude (A(N)) des Nutzsignals (N) im Temperaturmessbetrieb zu Abtastzeitpunkten bestimmt, an denen eine Amplitude des Hilfssignals (H) Extrema aufweist, und
- eine an die Abtastvorrichtung (33) angeschlossene Logik (35) vorgesehen ist,
-- die einen Vergleich der Vorzeichen der Amplituden von Hilfssignal (H) und Nutzsignal (N) an den Abtastzeitpunkten ausführt, und
-- anhand des Vergleichs eine Richtung und anhand der Amplituden des Nutzsignals (N) im Temperaturmessbetrieb einen Betrag ermittelt, um den der Wert der Größe des elektrischen Bauelements (R_{K}) nachzuregeln ist.

8. Vorrichtung gemäß einem der Ansprüche 1 bis 7, **dadurch gekennzeichnet,**
**dass**, an dem Wandler (9, 25) und dem Referenzelement (13) ein Signal mit einer periodisch kontinuierlich veränderlichen Frequenz (f) anliegt,
- dessen Perioden jeweils einen Zeitbereich umfassen,
-- in dem die Frequenz (f) des Signals kontinuierlich ansteigt oder abfällt, und
-- in dem das Signal das Anregungssignal (S) bildet, und
- dessen Perioden jeweils einen diesem Zeitbereich zeitlich vorausgehenden und/oder jeweils einen diesem Zeitbereich zeitlich nachfolgenden Zeitabschnitt umfassen,
-- in dem die Frequenz (f) des Signals konstant ist und außerhalb des durch eine Resonanzfrequenz (fᵣ) des Schwingungsgebildes (5, 27) vorgegebenen Frequenzbereichs liegt, und
-- in dem das Signal das Hilfssignal (H) bildet.

9. Vorrichtung gemäß einem der Ansprüche 1 bis 7, **dadurch gekennzeichnet, dass** Anregungs- und Hilfssignal (S, H) beide sinusförmige Signale, beide trapezförmige Signale, beide dreieckförmige Signale, oder beide rechteckförmige Signale sind.

10. Vorrichtung gemäß ein Anspruch 1, **dadurch gekennzeichnet, dass**
- das Anregungssignal (S_{H}) im Temperaturmessbetrieb ein rechteckförmiges Signal ist,
- das Hilfssignal (H) ein Anteil des Anregungssignals (S_{H}) ist, dessen Frequenzen oberhalb des durch die Resonanzfrequenz (fᵣ) des Schwingungsgebildes (5, 27) vorgegebenen Frequenzbereichs liegen,
- die Temperaturmesseinrichtung einen mit dem Nutzsignal (N) gespeisten Hochpass (37) aufweist, der aus dem Nutzsignal (N) ein Messsignal (M) herausfiltert, dessen Frequenzen oberhalb des durch die Resonanzfrequenz (fᵣ) des Schwingungsgebildes (5, 27) vorgegebenen Frequenzbereichs liegen, und
- die Temperaturmesseinrichtung anhand des Messsignals (M) die Temperatur (T) des Wandlers (25) bestimmt.

11. Vorrichtung gemäß Anspruch 10, **dadurch gekennzeichnet, dass**
- das Referenzelement (13) mindestens ein Bauelement (R_{K}) elektrisch einstellbarer Größe aufweist,
- eine an die Temperaturmesseinrichtung angeschlossene Regelvorrichtung (41) zur Einstellung der Größe des Bauelements (R_{K}) vorgesehen ist, die die Größe des Bauelements (R_{K}) auf den Wert regelt, bei dem der Betrag der Amplitude (A_{M}) des Messsignals (M) im Temperaturmessbetrieb minimal ist.

12. Vorrichtung nach Anspruch 11, **dadurch gekennzeichnet, dass**
- ein Speicher (SP) vorgesehen ist, in dem eine Kennlinie der Vorrichtung abgespeichert ist, die die Abhängigkeit des Wertes der einstellbaren Größe von der Temperatur (T) des Wandlers (9, 25) wiedergibt, und
- die Temperatur (T) anhand des geregelten Wertes und der Kennlinie bestimmt wird.

13. Vorrichtung nach Anspruch 11, **dadurch gekennzeichnet, dass**
das Referenzelement (13) eine Reihenschaltung aus dem Bauelement (R_{K}) elektrisch einstellbarer Größe und einem Kondensator (C_{ref}) mit einer vorgegebenen Referenzkapazität umfasst, und das Bauelement (R_{K}) ein Kompensationswiderstand ist.

14. Vorrichtung gemäß Anspruch 1, **dadurch gekennzeichnet, dass**
die Elektronik eine Kompensationsvorrichtung (47) aufweist, die anhand der in den Temperaturmessbetrieben bestimmten Temperaturen (T) mindestens eine Temperaturabhängigkeit einer von der Prozessgröße abhängigen Schwingungseigenschaft des Gebildes (5, 27) kompensiert.

15. Vorrichtung gemäß Anspruch 1, **dadurch gekennzeichnet, dass**
- die Vorrichtung ein Über- oder Unterschreiten eines vorgegebenen Grenzwertes der Prozessgröße überwacht,
- für einen vorgegebenen Temperaturbereich, in dem die Vorrichtung einsetzbar ist, Schwellwerte für die von der Prozessgröße abhängige Schwingungseigenschaft in der Vorrichtung abgelegt sind, die die Schwingungseigenschaft beim Erreichen des Grenzwertes bei der jeweiligen Temperatur (T) aufweist, und
- das Über- oder Unterschreiten des vorgegebenen Grenzwertes anhand der im Temperaturmessbetrieb ermittelten Temperatur (T) und dem dieser Temperatur (T) zugeordneten Schwellwert überwacht wird.

## Claims

1. Apparatus for determining and/or monitoring at least one process variable of a medium (1), particularly a density, a viscosity or a level of the medium (1) in a vessel (3), with
- a structure capable of vibrating mechanically (5, 27), which has at least one vibration property that depends on the process variable,
- an electromechanical transducer (9, 25) which has at least one piezoelectric element (7, 7a, 7b)
-- which excites the structure (5,27) to execute mechanical vibrations by means of an excitation signal (S) supplied to the transducer (9, 25), and
-- which converts the resulting vibrations of the structure (5, 27) into a reception signal (E) which corresponds to a superposition of the excitation signal (S) and a wanted signal (N) that reflects the vibrations,
- a reference element (13) parallel to the transducer (9, 25) that is exposed to the excitation signal (S), via said element a reference signal (S_{R}) is measured, said reference signal being independent of the vibration and corresponding to the excitation signal (S), and
- electronics,
-- which extract the wanted signal (N) by means of the reception signal (E) and the reference signal (S_{R}), and
-- which determine and/or monitor the process variable by means of the wanted signal (N),
**characterized in that**
the electronics comprise a temperature measurement unit, which is designed in such a way that in the temperature measuring mode it exposes the transducer (9, 25) and the reference element (13) to an auxiliary signal (H) whose frequency (f_{H}) is outside a frequency range specified by a resonance frequency (fᵣ) of the vibration structure (5, 27), and determines a temperature (T) of the transducer (9, 25) using the wanted signal (N) extracted in the temperature measuring mode.

2. Apparatus as claimed in Claim 1, **characterized in that**
- the reference element (13) has at least one component (R_{K}) with an electrically adjustable variable,
- a control apparatus connected to the temperature measurement unit is provided for the adjustment of the variable of the component (R_{K}), said control apparatus controlling the variable of the component (R_{K}) to a value at which a magnitude of an amplitude (A(N)) of the wanted signal (N) in the temperature measurement mode is a minimum.

3. Apparatus as claimed in Claim 2, **characterized in that**
- a memory (SP) is provided in which a characteristic curve of the apparatus is saved, said characteristic curve reflecting the dependency of the value of the adjustable variable on the temperature (T) of the transducer (9, 25), and
- the temperature (T) is determined using the regulated value and the characteristic curve.

4. Apparatus as claimed in Claim 1, **characterized in that** the reference element (13) comprises a series circuit consisting of the component (R_{K}) having an electrically adjustable variable and a capacitor (C_{ref}) with a predefined reference capacity, and **in that** the component (R_{K}) is a compensation resistor.

5. Apparatus as claimed in Claim 1, **characterized in that**
- a rectifier, which is fed the wanted signal (N) in the temperature measuring mode, is provided,
- the wanted signal (N) rectified using the rectifier is supplied to a logic unit (23), particularly a microcontroller or a field-programmable gate array (FPGA), and
- the logic unit (23) determines an amplitude of the rectified wanted signal (N) and regulates, in the temperature measuring mode, the variable of the adjustable component (R_{K}) to the value at which the magnitude of the amplitude of the wanted signal (N) is a minimum.

6. Apparatus as claimed in Claim 5, **characterized in that**
- the rectifier comprises a comparator (17), which is switched in parallel to the transducer (5) and the reference element (13), and a multiplier (19),
- in the temperature measuring mode, the auxiliary signal (H) is applied in parallel to the transducer (5), the reference element (13) and the comparator (17),
- an output signal of the comparator (17) and the wanted signal (N) are applied to the multiplier (19), and
- a low-pass filter (21) whose output signal is applied to the logic unit (23) as a rectified, smoothed, wanted signal, is connected downstream from the multiplier (19).

7. Apparatus as claimed in Claim 2, **characterized in that**
- a scanning unit (33) is provided that is designed to scan the wanted signal (N) and, in the temperature measuring mode, determines the amplitude (A(N)) of the wanted signal (N) at scan times when an amplitude of the auxiliary signal (H) shows extremes, and
- a logic unit (35) connected to the scanning unit (33) is provided,
-- said logic unit comparing the signs of the amplitudes of the auxiliary signal (H) and the wanted signal (N) at the scan times, and
-- determines a direction on the basis of the comparison and on the basis of the amplitudes of the wanted signal (N) in the temperature measuring mode determines a value by which the value of the variable of the electrical component (R_{K}) is to be corrected.

8. Apparatus as claimed in one of the Claims 1 to 7, **characterized in that** a signal with a frequency (f) that varies periodically and continually is applied to the transducer (9, 25) and the reference element (13)
- wherein, in each case, the periods of said signal comprise a time span,
-- in which the frequency (f) of the signal continuously rises or falls, and
-- in which the signal forms the excitation signal (S), and
- wherein, in each case, the periods comprise a time interval preceding this time span and/or following this time span,
-- wherein in said interval the frequency (f) of the signal is constant and is located outside the frequency range specified by a resonance frequency (fᵣ) of the vibration structure (5, 27), and
-- wherein in said interval the signal forms the auxiliary signal (H).

9. Apparatus as claimed in one of the Claims 1 to 7, **characterized in that** the excitation and auxiliary signals (S, H) are both sinusoidal signals, both trapezoidal signals, both triangular signals or both rectangular signals.

10. Apparatus as claimed in Claim 1, **characterized in that**
- the excitation signal (S_{H}) is a rectangular signal in the temperature measuring mode,
- the auxiliary signal (H) is part of the excitation signal (S_{H}) whose frequencies are above the frequency range specified by the resonance frequency (fᵣ) of the vibration structure (5, 27),
- the temperature measuring unit has a high-pass filter (37) which is fed with the wanted signal (N), said high-pass filter filtering out of the wanted signal (N) a measuring signal (M) whose frequencies are above the frequency range specified by the resonance frequency (fᵣ) of the vibration structure (5, 27), and
- the temperature measuring unit determines the temperature (T) of the transducer (25) using the measuring signal (M).

11. Apparatus as claimed in Claim 10, **characterized in that**
- the reference element (13) has at least one component (R_{K}) with an electrically adjustable variable,
- a control apparatus (41) connected to the temperature measuring unit is provided to adjust the variable of said component (R_{K}), which regulates the variable of the component (R_{K}) to the value at which the magnitude of the amplitude (A_{M}) of the measuring signal (M) in the temperature measuring mode is a minimum.

12. Apparatus as claimed in Claim 11, **characterized in that**
- a memory (SP) is provided in which a characteristic curve of the apparatus is saved, said characteristic curve reflecting the dependency of the value of the adjustable variable on the temperature (T) of the transducer (9, 25), and
- the temperature (T) is determined using the regulated value and the characteristic curve.

13. Apparatus as claimed in Claim 11, **characterized in that**
the reference element (13) comprises a series circuit consisting of the component (R_{K}) having an electrically adjustable variable and a capacitor (C_{ref}) with a predefined reference capacity, and **in that** the component (R_{K}) is a compensation resistor.

14. Apparatus as claimed in Claim 1, **characterized in that**
the electronics have a compensation apparatus (47) which uses the temperatures (T) determined in the temperature measurement modes to compensate for at least one temperature dependency of a vibration property of the structure (5, 27) that depends on the process variable.

15. Apparatus as claimed in Claim 1, **characterized in that**
- the apparatus monitors whether a defined limit value of the process variable is exceeded or undershot,
- threshold values for the vibration property that depends on the process variable are saved in the apparatus for a predefined temperature range in which the apparatus can be used, said threshold values being the threshold values that the vibration property presents when the limit value is reached at the specific temperature (T), and
- the overshooting or undershooting of the predefined limit value is monitored using the temperature (T) determined in the temperature measuring mode and the threshold value assigned to this temperature (T).

## Revendications

1. Dispositif destiné à la détermination et/ou la surveillance d'au moins une grandeur process d'un produit (1), notamment une densité, une viscosité ou un niveau du produit (1) dans un réservoir (3), avec
- un dispositif apte à vibrer mécaniquement (5, 27), qui présente au moins une caractéristique de vibration dépendant de la grandeur process,
- un convertisseur électromécanique (9, 25) comportant au moins un élément piézoélectrique (7, 7a, 7b)
-- qui excite en vibrations mécaniques le système (5,27) au moyen d'un signal d'excitation (S) acheminé au convertisseur (9, 25), et
-- qui convertit les vibrations résultant du système (5, 27) en un signal de réception (E) correspondant à une superposition du signal d'excitation (S) et d'un signal utile (N) reflétant les vibrations,
- un élément de référence (13) parallèle au convertisseur (9, 25), alimenté avec le signal d'excitation (S), élément par l'intermédiaire duquel est prélevé un signal de référence (S_{R}) indépendant des vibrations et correspondant au signal d'excitation (S), et
- une électronique,
-- qui extrait le signal utile (N) au moyen du signal de réception (E) et du signal de référence (S_{R}), et
-- qui détermine et/ou surveille la grandeur process au moyen du signal utile (N), **caractérisé**
**en ce que** l'électronique comprend un dispositif de mesure de température, lequel est équipé de telle sorte à alimenter le convertisseur (9, 25) et l'élément de référence (13) dans un mode de mesure de température avec un signal auxiliaire (H), dont la fréquence (f_{H}) se situe en dehors d'une plage de fréquence prédéfinie par une fréquence de résonance (fᵣ) du système vibrant (5, 27), et détermine, sur la base du signal utile (N) extrait en mode de mesure de température, une température (T) du convertisseur (9, 25).

2. Dispositif selon la revendication 1, **caractérisé en ce**
- **que** l'élément de référence (13) présente au moins un composant (R_{K}) de taille réglable électriquement,
- **qu'**est prévu un dispositif de réglage raccordé au dispositif de mesure de température, destiné au réglage de la taille du composant (R_{K}), qui règle la taille du composant (R_{K}) à la valeur pour laquelle une amplitude (A(N)) du signal utile (N) - déterminé dans le mode de mesure de température - est minimale.

3. Dispositif selon la revendication 2, **caractérisé en ce**
- **qu'**est prévue une mémoire (SP), dans laquelle est enregistrée une courbe caractéristique du dispositif, qui reflète la dépendance de la valeur de la taille réglable par rapport à la température (T) du convertisseur (9, 25), et
- **que** la température (T) est déterminée au moyen de la valeur réglée et de la courbe caractéristique.

4. Dispositif selon la revendication 1, **caractérisé en ce**
**que** l'élément de référence (13) comprend un circuit série constitué du composant (R_{K}) réglable électriquement et d'un condensateur (C_{ref}) d'une capacité de référence prédéfinie, et **en ce que** le composant (R_{K}) est une résistance de compensation.

5. Dispositif selon la revendication 1, **caractérisé en ce**
- **qu'**est prévu un redresseur alimenté avec le signal utile (N) en mode de mesure de température,
- **que** le signal utile (N) redressé au moyen du redresseur est acheminé à une logique (23), notamment un microcontrôleur ou un circuit logique programmable (FPGA), et
- **que** la logique (23) détermine une amplitude du signal utile (N) redressé, et la taille du composant (R_{K}) réglable est réglée, en mode de mesure de température, à la valeur pour laquelle l'amplitude du signal utile (N) est minimale.

6. Dispositif selon la revendication 5, **caractérisé en ce**
- **que** le redresseur comprend un comparateur (17) et un multiplicateur (19) couplés parallèlement au convertisseur (5) et à l'élément de référence (13),
- **que** le signal auxiliaire (H) est appliqué, en mode de mesure de température, parallèlement au convertisseur (5), à l'élément de référence (13) et au comparateur (17),
- **qu'**un signal de sortie du comparateur (17) et le signal utile (N) sont appliqués au multiplicateur (19), et
- en ce qu'est couplé en aval du multiplicateur (19) un filtre passe-bas (21), dont le signal de sortie est appliqué à la logique (23) sous la forme d'un signal utile redressé et lissé.

7. Dispositif selon la revendication 2, **caractérisé en ce**
- **qu'**est prévu un dispositif d'échantillonnage (33) destiné à l'échantillonnage du signal utile (N), lequel dispositif détermine, en mode de mesure de température, l'amplitude (A(N)) du signal utile (N) à des instants d'échantillonnage auxquels une amplitude du signal auxiliaire (H) présente des extrêmes, et
- en ce qu'est prévue une logique (35) raccordée au dispositif d'échantillonnage (33),
-- laquelle logique effectue une comparaison des signes des amplitudes du signal auxiliaire (H) et du signal utile (N) aux instants d'échantillonnage, et
-- détermine au moyen de la comparaison, en mode de mesure de température, une direction et, au moyen des amplitudes du signal utile (N), un montant destiné à rajuster la valeur de la taille du composant (R_{K}) électrique.

8. Dispositif selon l'une des revendications 1 à 7, **caractérisé en ce qu'**est appliqué, au convertisseur (9, 25) et à l'élément de référence (13), un signal d'une fréquence (f) variable périodiquement et continuellement,
- signal dont les périodes comprennent respectivement une plage de temps,
-- dans laquelle la fréquence (f) du signal croît ou décroît continuellement, et
-- dans laquelle le signal forme le signal d'excitation (S), et
- dont les périodes comprennent respectivement un intervalle de temps précédent cette plage de temps et/ou suivant cette plage de temps,
-- intervalle dans lequel la fréquence (f) du signal est constante et est située en dehors de la plage de fréquence prédéfinie par une fréquence de résonance (fᵣ) du système vibrant (5, 27), et
-- intervalle dans lequel le signal forme le signal auxiliaire (H).

9. Dispositif selon l'une des revendications 1 à 7, **caractérisé en ce que** le signal d'excitation et le signal auxiliaire (S, H) sont tous deux des signaux sinusoïdaux, tous deux des signaux trapézoïdaux, tous deux des signaux triangulaires, ou tous deux des signaux rectangulaires.

10. Dispositif selon la revendication 1, **caractérisé en ce**
- **que** le signal d'excitation (S_{H}) en mode de mesure de température est un signal rectangulaire,
- **que** le signal auxiliaire (H) est une part du signal d'excitation (S_{H}), dont les fréquences sont supérieures à la plage de fréquence prédéfinie par la fréquence de résonance (fᵣ) du système vibrant (5, 27),
- **que** le dispositif de mesure de température comporte un filtre passe-haut (37) alimenté avec le signal utile (N), lequel filtre passe-haut extrait à partir du signal utile (N) un signal de mesure (M) dont les fréquences sont supérieures à la plage de fréquence prédéfinie par la fréquence de résonance (fᵣ) du système vibrant (5, 27), et
- en ce que le dispositif de mesure de température détermine sur la base du signal de mesure (M) la température (T) du convertisseur (25).

11. Dispositif selon la revendication 10, **caractérisé en ce**
- **que** l'élément de référence (13) présente au moins un composant (R_{K}) de taille réglable électriquement,
- **qu'**est prévu un dispositif de réglage (41) raccordé au dispositif de mesure de température, destiné au réglage de la taille du composant (R_{K}), qui règle la taille du composant (R_{K}) à la valeur pour laquelle l'amplitude (A_{M}) du signal de mesure (M) - déterminée dans le mode de mesure de température - est minimale.

12. Dispositif selon la revendication 11, **caractérisé en ce**
- **qu'**est prévue une mémoire (SP), dans laquelle est mémorisée une courbe caractéristique du dispositif, laquelle courbe reflète la dépendance de la valeur de la taille réglable par rapport à la température (T) du convertisseur (9, 25), et
- **qu'**est déterminée la température (T) sur la base de la valeur réglée et de la courbe caractéristique.

13. Dispositif selon la revendication 11, **caractérisé en ce**
**que** l'élément de référence (13) comprend un circuit série constitué du composant (R_{K}) réglable électriquement et d'un condensateur (C_{ref}) d'une capacité de référence prédéfinie, et **en ce que** le composant (R_{K}) est une résistance de compensation.

14. Dispositif selon la revendication 1, **caractérisé en ce**
**que** l'électronique comporte un dispositif de compensation (47), qui compense, sur la base des températures (T) déterminées dans les modes de mesure de température, au moins une dépendance de température d'une caractéristique de vibration du système (5, 27) dépendant de la grandeur process.

15. Dispositif selon la revendication 1, **caractérisé en ce que**
- le dispositif surveille un dépassement par le haut ou par le bas d'une valeur seuil prédéfinie de la grandeur process,
- sont enregistrées dans le dispositif, pour une plage de température prédéfinie, dans laquelle le dispositif est utilisable, des valeurs seuils pour la caractéristique de vibration dépendant de la grandeur process, valeurs seuils que la caractéristique de vibration présente lors de l'atteinte de la valeur limite à la température (T) respective, et
- le dépassement par le haut ou par le bas de la valeur limite prédéfinie est surveillée au moyen de la température (T) déterminée en mode de mesure de température, et au moyen de la valeur seuil attribuée à cette température (T).
